# EUROPEAN PATENT APPLICATION

(11) **EP 0 996 236 A1**
(43) Date of publication of application: **26.04.2000**
(21) Application number: 98402644.3
(22) Date of filing: 23.10.1998
(51) Int. Cl.: H04B 3/04, H04J 3/06

(54) **Method apparatus to compensate for distortions within a multiple access communications system**

(71) Applicant: ALCATEL, 75008 Paris (FR)
(72) Inventor: Haspeslagh, Johan Joseph Gustaaf, 3210 Linden (BE); Goris, Geert, 3200 Aarschot (BE)
(74) Representative: Narmon, Gisèle Marie Thérèse

(57) **Abstract**

A method is described to compensate for distortions in a communications network wherein a central station is coupled to a plurality of user network terminals via a plurality of communication channels consisting of the cascade connection of a plurality of user network terminal links and a common link. By this method, distortions which are common to all of said communication channels are equalised within said central station, whereas distortions which are only dependent on one respective communication channel, are compensated within the respective user network terminal coupled to this respective communication channel, by performing within said respective user network terminal, a pre-correcting step on signals to be transmitted by said respective user network terminal. A user network terminal, central station and a communications network adapted to perform the present method are also described.

## Description

The present invention relates to a method to compensate for distortions in a communications network, as is described in the preamble of claim 1, to a user network terminal to be used in such a communications network and adapted to perform such a method, as is described in the preamble of claim 6, to a central station of such a communications network as is described in the preamble of claim 11 and to a such a communications network as is described in the preamble of claim 17.

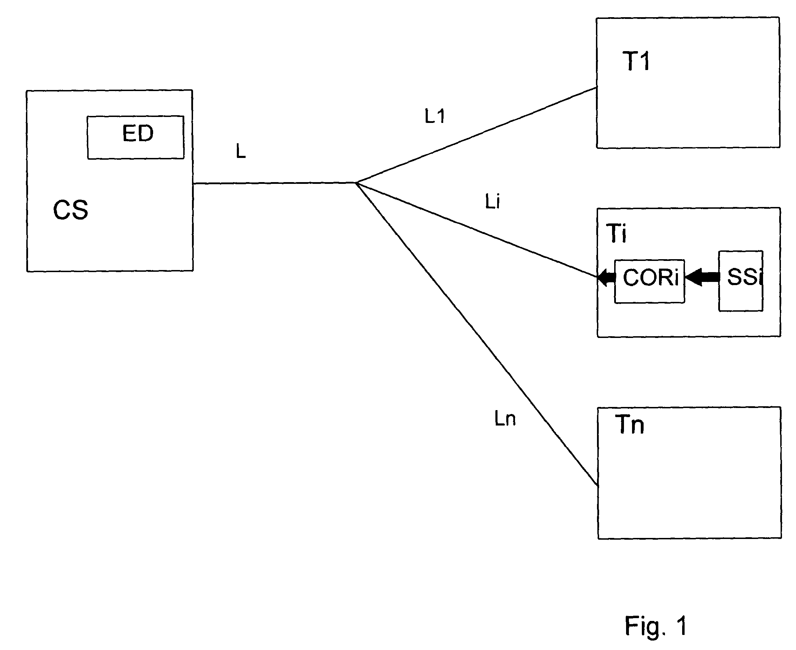

Such a method, user network terminal, central station and communications network, are already known in the art, e.g. from the article "*Cable Modem architectures adapted to the noise problem in the upstream direction for multiple access Hybrid Fiber Coax Networks*"*, proceedings SYBEN 98, Zürich*. Therein, a Hybrid Fiber Coax, hereafter abbreviated with HFC, network is described, including a head-end corresponding to the central station of the non-characteristic part of claims 1,6,11 and 17, and which is coupled by a common link consisting of an optical and a coaxial part, and respective individual links or drops, to a plurality of user network terminals such as set top boxes and cable modems, respectively abbreviated with STB and CDM in Figure 1 of the referred prior art document. The head-end of the described prior art communications system includes an adaptive equaliser corresponding to the equalisation device as described in the preamble of claims 11 and 17, in order to compensate for fast varying distortions such as ingress and impulse noise.

Besides noise which is distorting the user signals transmitted by the user network terminals, each of the communication channels themselves introduces an additional distortion. This channel induced distortion is different for each user network terminal since each communication channel is different, because of the difference in length, diameter, number of inserted amplifiers etc., of each of these communication channels coupled between each user network terminal and the central station. The prior art document briefly mentions this issue in paragraph 5 "system architecture", by describing that amplitude and phase characteristic differences between subscribers are to be compensated, without however explicitly offering a solution to this problem.

An object of the present invention is therefore to provide a method, a user network terminal, a central station and a communications network of the above known type wherein the problem of distortion compensation in general is solved.

According to the invention, this object is achieved due to the fact that distortions which are particular to one respective communication channel coupled to a respective user network terminal, are compensated for in this respective user network terminal itself as is described in the characteristic part of claim 1, this particular user network terminal itself therefore including a pre-correction means, as is further described in the characteristic parts of claims 6 and 17, and that said central station only equalises distortions which are common to all communication channels, as is described in the characteristic part of claim 11.

In this way, a solution is provided for the compensation of both channel independent and channel dependent impairments, this solution allowing the equaliser residing within the head-end or central station to remain relatively simple since it is only adapted to compensate for the common noise characteristics.

A further characteristic feature of the present invention is described in claims 2, 7 and 12.

By transmission of a test signal from the user network terminal to the central station, which accordingly extract from this test signal correction parameters for retransmission towards the pre-correction means of this user network terminal, an efficient way for implementing the subject method is provided. Indeed, a variant method whereby the compensation of the channel-induced distortions takes place by means of a training sequence in which test signals are transmitted by the user network terminals to the central station, which merely returns them back, and whereby the pre-correction means in each of the user network terminals determines these correction parameters from the transmitted and returned test signals by themselves, requires this functionality thus to be implemented within each user terminal of the network. In case of a lot of user network terminals however, it is therefore much more appropriate and less costly to have only one such extraction means residing centrally within the central station, and which is adapted to extract the parameters for instance in a time-shared way, for each of the connected terminals.

In general, since the communication channel specific errors do not vary substantially as a function of the time during the operation of the communications network, the transmission of the test signal by the user network terminals, and the subsequent determination of the correction parameters by the central station, is performed once, for instance during initialisation of the user network terminal, or at predetermined instances.

Another characteristic feature of the present invention is that these distortions which are only dependent on one particular communication channel include timing errors, to be compensated for by a timing or symbol synchronisation operation between the respective user network terminal coupled to this particular communication channel and the central station, as is further described in claims 3,8, and 13.

Indeed, a synchronisation at symbol level, between both the central station and the respective user network terminal, results in timing-error-free data signals transmitted by this user network terminal to the central station. In claim 13 is stated that the necessary correction parameter for performing this timing or symbol synchronisation, being a clock information signal, is extracted within the central station, after which step it is provided as a feedback signal to the user network terminal. On all following data signals to be transmitted by the user network terminal, the timing correction is performed within a timing control means of the pre-correction means, as is stated in claim 8, based on the clock information signal extracted from the test signal and returned back to the pre-correction means.

A further characteristic feature of the present invention is that these distortions which are only dependent on one particular communication channel include frequency errors, which are compensated for by a frequency synchronisation operation between the respective user network terminal coupled to this particular communication channel and the central station, as is further described in claims 4, 9 and 14.

Similar to the timing errors, a synchronisation operation at the frequency level results in frequency error-free data signals to be transmitted from the user network terminal to the central station. Frequency errors are in general related to the carrier with which the data signal is to be modulated. In the variant of the central station embodiment which is described in claim 14, a carrier extraction means is included in this central station for extraction of this carrier information from a test signal transmitted by the user network terminal. This carrier information is consecutively retransmitted as a feedback signal to the user network terminal in which a frequency control means is adapted to synchronise all subsequent data signals at the frequency level using the correct carrier information. This operation may for instance consist of modulating the data signal with a carrier wave, the frequency of which was provided by the central station.

Still a further characteristic feature of the present invention is that these distortions which are only dependent on one particular communication channel include amplitude and phase errors, to be compensated for by an equalisation operation within the respective user network terminal coupled to this particular communication channel as is further described in claims 5 and 10, and whereby information necessary for performing this equalisation operation is extracted within the central station and provided by this central station to this respective user network terminal, as is further described in claim 15.

Again, similar to the previously described classes of communication channel dependent errors, also the particular filter characteristic features of the communications channel itself such as amplitude and phase characteristics, are compensated within the user network terminal by filtering the data signals to be transmitted by the user network terminal, the resultant operation thus being an equalisation of these amplitude and phase errors. The filter or equaliser coefficients are thereby provided by the central station, again by extracting the necessary information from a test signal transmitted by the respective user network terminal, and by providing these coefficients back to the respective user network terminal, as stated in claim 5,10 and 15.

The present invention also relates to a communication network including a plurality of user network terminals and including a central station, at least one user network terminal and said central station being adapted to perform the above described method, as is described in claim 17.

The above and other objects and features of the invention will become more apparent and the invention itself will be best understood by referring to the following description of an embodiment taken in conjunction with the accompanying drawings wherein:
Fig. 1 schematically depicts a communications network in accordance to the present invention,
Fig. 2 schematically depicts a user network terminal of the communications network of Fig. 1 and
Fig. 3 schematically depicts a central station of the communications network of Fig. 1.

The subject method for compensation of distortions is used within a communications network as depicted in Fig. 1. Therein a central station CS is coupled to each of a plurality of user network terminals T1,.., Ti,..Tn, via a common link L and a respective corresponding individual link denoted L1,...,Li,...,Ln. This communications network thus corresponds to a multiple access communications network with point to multipoint architecture in the downstream direction from central station to the user network terminals and with a multipoint to point architecture in the upstream direction from the user network terminals to the central station. Each user network terminal, for instance terminal Ti, is thus connected to the central station via a unique communication channel Ci, consisting of the cascade connection of the common link L and the corresponding individual link, being Li for terminal Ti . Such communications networks can for instance consist of hybrid fiber coax, abbreviated with HFC, networks, or asynchronous passive optical, abbreviated with APON, networks, multi-user twisted pair networks and fixed point wireless networks.

In all these networks, the individual network links or drops can significantly differ from each other in length, diameter, the number of inserted amplifiers, etc. Therefore the corresponding communication channels C1,...,Ci,..., Cn all have different characteristics, introducing a different delay, frequency shift, and amplitude and phase error with respect to identical test signals transmitted by each of the terminals T1 to Tn. In these networks, due to the nature of the link, this kind of channel inherent distortions hardly vary in function of the time. Besides these channel inherent distortions, however another type of distortions for instance consisting of impulse or ingress noise in HFC networks, are present, as was already described in the prior art article referred to in the introductory part of this document. This kind of noise is highly variable as a function of the time, as was also shown in this prior art article. Yet this noise, seen from the central station, can be considered as terminal or channel independent. Summarised two types of distortions are present in such communications networks : on one hand the slowly varying, but communication channel dependent errors, on the other hand fast varying, but common channel characteristic noise errors.

As was already described in the prior art article, this last category of distortions is corrected, according to the subject method, within the central station in an equalisation device, denoted ED, included therein. Embodiments of such an equalisation device are already described in this prior art article and will therefore not be further described within this document.

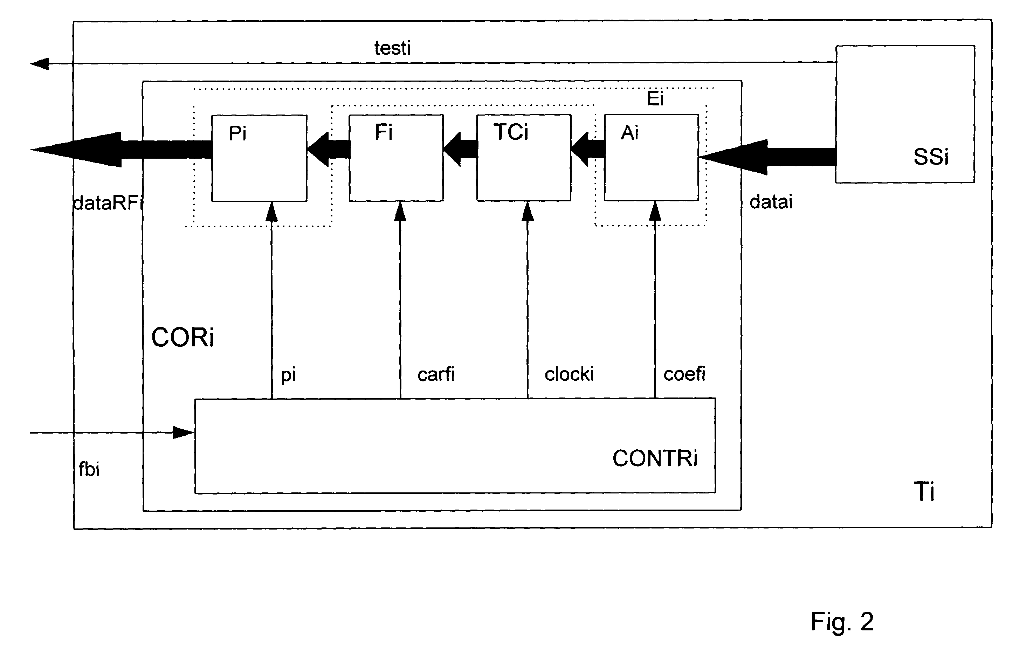

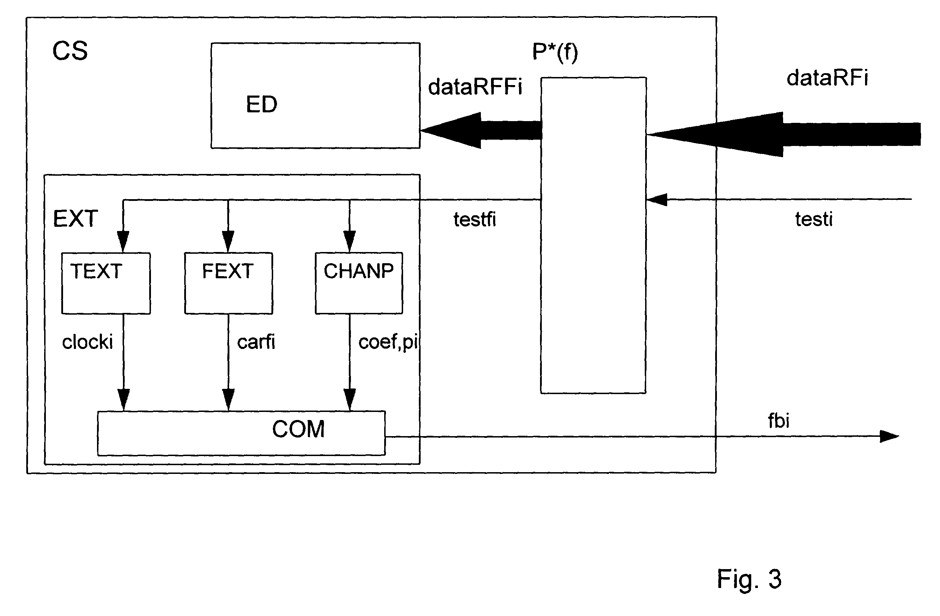

The first category of distortions, namely channel dependent distortions, are, according to the present invention, compensated for within the individual user network terminals to which these communication channels are coupled. For instance, distortions related to communication channel Ci, physically consisting of common link L and drop Li, are compensated in user network terminal Ti. To this purpose signals generated within a signal source denoted SSi on Fig. 1, are pre-corrected by means of a pre-correction means CORi, before being transmitted towards the central station CS. In Fig. 2 user network terminal Ti is shown more into detail. The pre-correction device CORi thereby consists of four main building blocks : a terminal equalisation means Ei, which itself is split into a filter Ai and an amplifier Pi, a timing control means TCi, a frequency control means Fi and a control device CONTRi. In the embodiment depicted in Fig. 2, the data generated by the signal source SSi, and which are denoted datai, are first equalised within a programmable filter Ai, next a timing synchronisation operation is performed on the filtered data, the result of this operation being followed by a frequency synchronisation step, the result of which is finally amplified within a power control or amplifier device. The result of the complete correction operation being denoted as dataRFi. The necessary control information for performing the above mentioned correction operations is provided to the latter devices by means of a control device, denoted CONTRi on Fig. 2. In the embodiment depicted in Fig. 2 this control device thereby provides the filter coefficients, denoted coefi, to the programmable filter Ai, a clock information signal denoted clocki, to the timing control means TCi, a carrier information signal, denoted carfi, to the frequency control means Fi, and power information, denoted pi, to the power amplifier Pi. These control parameters are, in one variant of the method and embodiment of central station and user network terminal, either determined within the control device CONTRi itself. In another variant of the method and embodiment of the central station and user network terminal, these parameters are determined centrally within the central station CS. For the first variant, the signal source SSi of the user network terminal Ti, transmits a test signal towards the central station CS. The latter receives this and merely transmits it back as a feedback signal. This is then received by the control device, which includes the necessary comparison and extraction devices in order to derive from the original test signal and from the re-transmitted test signal, the carrier information signal, the clock information signal and filter and power coefficients for subsequently providing this to the timing control means, frequency control means, programmable filter and power amplifier respectively. This solution may be used in case only a few user network terminals are part of the network since it is clear that in this case each control device of each user network terminal needs to incorporate the necessary comparing and extraction devices for extracting the correction parameters. It is therefore more appropriate to incorporate this functionality within the central station itself, since this functionality may then be shared by all user network terminals, for instance in a time-multiplexed way. This solution is used in the embodiment of the user network terminal depicted in Fig. 2, and of the central station depicted in Fig. 3. The user terminal signal source SSi thereby transmits a test signal, denoted testi , towards the central station CS. This central station CS includes a receive filter, denoted P*(f) which receives this test signal testi, thereon performs a filter operation, the resultant signal being tesfi. Such receive filters are commonly known by a person skilled in the art, and since these are not relevant to this invention, these will not be further described into detail in this document. The filtered test signal testfi is further transmitted towards a extraction means EXT included in the central station. This extraction means itself includes a clock extraction means, denoted TEXT, adapted to extract from the incoming filtered test signal testfi a clock information signal denoted clocki. TEXT further includes a carrier extraction means, denoted FEXT, adapted to extract from testfi a carrier information signal, denoted carfi, as well as a channel parameter extraction means denoted CHANP, adapted to extract from testfi channel modelling parameters, denoted coefi and Pi, and respectively related to the phase and amplitude errors. The three sets of information signals are combined within a combining device, denoted COM, of the extraction means EXT, to form a feedback signal denoted fbi, which is finally transmitted back towards the control device CONTRi of the pre-correction means CORi of the user network terminal Ti. In the embodiment depicted in Fig. 2, the control device CONTRi is thus adapted to derive from the received feedback signal fbi, the individual correction parameters and to provide them to the appropriate previously described functional blocks within the pre-correction means.

Possible embodiments of the timing control means TCi may consist of an interpolator for performing the timing compensation. The frequency control means may consist of a complex mixer including a digital voltage controlled oscillator, for performing the frequency correction. The terminal equalisation means, consists, as already mentioned in a previous paragraph of this document of a programmable filter together with a power amplifier.

Since the characteristics of the communication channel Ci hardly vary as a function of the time, the transmission of the test signal testi by the user network terminal Ti, as well as the determination, within the central station CS, of the clock information and carrier information signals and of the coefficients relative to the amplitude and phase errors, as well as their combining to a feedback signal and transmission of this feedback signal towards the user network terminal Ti, are generally performed during start-up of the system, or start up of a particular terminal. In other variants of the method, this operation can be repeated at predetermined instances.

Once the necessary correction parameters to be used in the pre-correction means, are determined and transmitted to the control device of this pre-correction means, they are stored within this control device, and subsequently used for pre-correcting all data signals to be transmitted by the user network terminal. In this way, the transmitted signal dataRFi is thus compensated for channel-inherent distortions. Once the pre-corrected signal dataRFi is received by the central station CS, it is first filtered by the receive filter P*(f), as can be seen from Fig. 3, for thereby generating a filtered signal dataRFFI, of which the common noise is subsequently eliminated within the equalisation device ED.

It is to be remarked that all signals, transmitted from and the user network terminal to and from the central station, are using the communication channel Ci, thus consisting of individual link Li, in cascade with common link L.

While the principles of the invention have been described above in connection with specific apparatus, it is to be clearly understood that this description is made only by way of example and not as a limitation on the scope of the invention, as defined in the appended claims.

## Claims

1. Method to compensate for distortions in a communications network including a central station (CS) coupled to a plurality of user network terminals (T1,...,Ti,...,Tn), via a plurality of communication channels (C1,..,Ci,..,Cn) consisting of the cascade connection of a plurality of user network terminal links (L1,..,Li,...,Ln) and a common link (L), said method including a step of equalising distortions within said central station (CS),
characterised in that
only distortions which are common to all of said communication channels of said plurality of communication channels (C1,...,Ci,...,Cn), are equalised within said central station (CS), whereas
distortions which are only dependent on one respective communication channel (Ci) of said plurality of communication channels (C1,...,Ci,...,Cn) are compensated within the respective user network terminal (Ti) coupled to said one respective communication channel (Ci), by performing within said respective user network terminal (Ti), a pre-correcting step on signals to be transmitted by said respective user network terminal (Ti).

2. Method according to claim 1
characterised in that
said method includes
- a step of transmitting a test signal by said respective user network terminal (Ti) to said central station (CS),
- a step of receiving said test signal by said central station (CS),
- a step of extracting from said test signal, within said central station (CS), of correction parameters relevant to said pre-correction step,
- a step of transmitting said correction parameters by said central station, as a feedback signal (fbi) towards said respective user network terminal (Ti).

3. Method according to claim 1
characterised in that
said distortions which are only dependent on said one respective communication channel (Ci) include timing errors,
said method thereby includes a step of correcting said timing errors by a step of symbol synchronisation between said respective user network terminal (Ti) and said central station (CS).

4. Method according to claim 1
characterised in that
said distortions which are only dependent on said respective communication channel (Ci) include frequency errors,
said method thereby including a step of correcting said frequency errors by a step of frequency synchronisation between said respective user network terminal (Ti) and said central station (CS).

5. Method according to claim 1
characterised in that
said distortions which are only dependent on said respective communication channel (Ci) include amplitude and phase errors
said method thereby including a step of correcting said amplitude and phase errors by equalising said amplitude and phase errors within said respective user network terminal (Ti).

6. User network terminal (Ti) to be used in a communications network wherein a central station (CS) is coupled to a pluralily of user network terminals similar to said user network terminal (Ti) via a plurality of communication channels consisting of the cascade connection of a plurality of user network terminal links and a common link (L),
characterised in that
said user network terminal (Ti) includes pre-correction means (CORi) adapted to pre-correct signals to be transmitted by said user network terminal (Ti) to said central station (CS), said pre-correction means (CORi) thereby being adapted to compensate for distortions which are only dependent on the communication channel (Ci) coupled between said user network terminal (Ti) and said central station (CS) and not for distortions which are common to all of said communication channels of said plurality of communication channels (C1,...,Ci,...,Cn).

7. User network terminal (Ti) according to claim 6
characterised in that
said user network terminal (Ti) is adapted to transmit a test signal to said central station (CS), and
said pre-correction means (CORi) includes a control device (CONTRi) adapted to receive from said central station (CS) a feedback signal (fbi) including correction parameters for compensation of said distortions which are only dependent on said communication channel (Ci) coupled between said user network terminal (Ti) and said central station (CS).

8. User network terminal (Ti) according to claim 6
characterised in that
said distortions which are only dependent on said respective communication channel include timing errors, and
said pre-correction means (CORi) thereby includes timing control means (TCi) adapted to perform a timing synchronisation operation on said signals, such that said user network terminal (Ti) is synchronised at symbol level with said central station (CS).

9. User network terminal (Ti) according to claim 6
characterised in that
said distortions which are only dependent on said respective communication channel (Ci) include frequency errors, and
said pre-correction means (CORi) thereby includes frequency control means (Fi) adapted to perform a frequency synchronisation operation on said signals, such that said user network terminal (Ti) is synchronised at frequency level with said central station (CS).

10. User network terminal (Ti) according to claim 6
characterised in that
said distortions which are only dependent on said respective communication channel (Ci) include amplitude and phase errors,
said pre-correction means (CORi) thereby includes terminal equalisation means (Ei) adapted to equalise said amplitude and phase errors.

11. Central station of a communications network, wherein said central station (CS) is coupled to a plurality of user network terminals (T1,...,Ti,...,Tn) via a plurality of communication channels (C1,..,Ci,...,Cn), consisting of the cascade connection of a plurality of user network terminal links (L1,...,Li,...,Ln) and a common link (L), said central station (CS) including an equalisation device (ED) adapted to equalise distortions,
characterised in that
said equalisation device (ED) is adapted to only equalise distortions which are common to all of said communication channels of said plurality of communication channels (C1,...,Ci,...,Cn).

12. Central station (CS) according to claim 11
characterised in that
said central station (CS) includes extraction means (EXT) adapted to receive from a user network terminal (Ti) of said plurality of user network terminals (T1,..,Ti,...,Tn), a test signal, to extract therefrom correction parameters relevant to distortions which are only dependent on the communication channel (Ci) via which said user network terminal is coupled to said central station (CS), and to transmit said correction parameters as a feedback signal (fbi) back to said user network terminal (Ti) .

13. Central station (CS) according to claim 12
characterised in that
said distortions which are only dependent on said communication channel (Ci) include timing errors,
said extraction means (EXT) thereby includes clock extraction means (TEXT) adapted to extract from said test signal, a clock information signal (clocki).

14. Central station (CS) according to claim 12
characterised in that
said distortions which are only dependent on said communication channel (Ci) include frequency errors,
said extraction means (EXT) thereby includes carrier extraction means (FEXT) adapted to extract from said test signal, a carrier information signal (cari).

15. Central station (CS) according to claim 12
characterised in that
said distortions which are only dependent on said communication channel (Ci) include amplitude and phase errors,
said extraction means (EXT) thereby includes channel parameter extraction means (CHANP) adapted to extract from said test signal, coefficients relative to said amplitude and phase errors (pi,coefi).

16. Central station (CS) according to claims 13, 14 and 15
characterised in that
said extraction means (EXT) further includes combining means (COMB) adapted to receive from said clock extraction means (TEXT) said clock information signal (clocki), from said carrier extraction means (FEXT) said carrier information signal (cari), and from said channel parameter extraction means (CHANP) said coefficients relative to said amplitude and phase errors (pi,coefi), and to provide said clock information signal (clocki), said carrier information (cari) signal and said coefficients (pi,coefi) as said feedback signal (fbi) to said user network terminal (Ti).

17. Communications network including a central station (CS) coupled to a plurality of user network terminals (T1,...,Ti,...,Tn), via a plurality of communication channels (C1,...,Ci,...,Cn) consisting of the cascade connection of a plurality of user network terminal links (L1,..,Li,...,Ln) and a common link (L), said central station including an equalisation device (ED) adapted to equalise distortions,
characterised in that
said equalisation device (ED) is adapted to only equalise distortions which are common to all of said communication channels of said plurality of communication channels (C1,...,Ci,...,Cn),
at least one user network terminal (Ti) of said plurality of user network terminals (T1,...,Ti,...,Tn) includes pre-correction means (CORi) adapted to pre-correct signals to be transmitted by said at least one terminal (Ti) to said central station (CS), said pre-correction means (CORi) thereby being further adapted to compensate for distortions which are only dependent on the at least one communication channel (Ci) coupled between said at least one user network terminal (Ti) and said central station (CS).
